# EUROPÄISCHE PATENTSCHRIFT

(11) **EP 2 708 668 B1**
(45) Veröffentlichungstag und Bekanntmachung des Hinweises auf die Patenterteilung: **31.12.2014**
(21) Anmeldenummer: 12184184.5
(22) Anmeldetag: 13.09.2012
(51) Int. Cl.: E04B 1/76, E04B 1/94, C08J 9/00, C08J 9/224, C08J 9/236

(54) **Verfahren zur Herstellung eines flammgeschützen Dämmelementes, Dämmelement sowie Verwendung eines Dämmelementes**
Method for producing a flame retardant insulating element, insulating element and use of an insulating element
Procédé de fabrication d'un élément d'isolation ignifuge, élément d'isolation ainsi que l'utilisation d'un élément d'isolation

(43) Veröffentlichungstag der Anmeldung: 19.03.2014
(73) Patentinhaber: STO SE & Co. KGaA, 79780 Stühlingen (DE)
(72) Erfinder: Hitzler, Martin, 78244 Gottmadingen (DE); Kohler, Eva, 79777 Ühlingen-Birkendorf (DE); Weier, Andreas, 78647 Trossingen (DE); Isele, Robert, 79777 Berau (DE); Burgeth, Gerald, 79787 Lauchringen (DE)
(74) Vertreter: Gottschalk, Matthias

(56) Entgegenhaltungen:
- EP-A1- 0 994 145
- EP-A2- 0 113 511
- WO-A1-2008/145599
- US-A1- 2010 204 350

## Beschreibung

Die Erfindung betrifft ein Verfahren zur Herstellung eines flammgeschützten Dämmelementes mit den Merkmalen des Oberbegriffs des Anspruchs 1. Ferner betrifft die Erfindung ein Dämmelement sowie eine Verwendung eines nach einem erfindungsgemäßen Verfahren hergestellten Dämmelementes.

### Stand der Technik

Bei der Schall- und/oder Wärmedämmung von Gebäudewänden oder -decken finden häufig Hartschaumplatten, insbesondere Polystyrol-Hartschaumplatten, als Dämmelemente Einsatz. Diese weisen zum einen gute Wärmedämmeigenschaften auf und sind zum anderen relativ kostengünstig herstellbar. Zudem sind sie auf der Baustelle einfach zu handhaben, da sie formstabil und wasserunempfindlich sind. Als nachteilig erweist sich jedoch in der Regel das Brandverhalten von Dämmelementen aus einem Hartschaum, welche daher regelmäßig der Baustoffklasse B (brennbare Baustoffe) gemäß DIN 4102-1 zuzuordnen sind.

Aus der WO 2008/145599 A1 ist ein feuerhemmender Polystyrol-Schaumstoff bekannt, welcher zum einen ein verbessertes Brandverhalten aufweisen und zum anderen keine Verschlechterung seiner ursprünglichen Eigenschaften aufweisen soll. Insbesondere soll der Polystyrol-Schaumstoff weiterhin eine geringe Wasserdurchlässigkeit, eine hohe Wasserbeständigkeit, sehr guter Wärmedämm- und Schallschutzeigenschaften sowie eine hohe mechanische Festigkeit bei gleichzeitig geringem Gewicht bzw. geringer Dichte aufweisen. Darüber hinaus soll die Herstellbarkeit des Polystyrol-Schaumstoffs auf den herkömmlichen Anlagen gewährleistet sein, so dass er weiterhin kostengünstig herstellbar ist. Gemäß der Druckschrift werden diese Ziele durch eine Zusammensetzung erreicht, welche expandierte oder expandierbare Polystyrol-Partikel, einen intumeszenten Stoff und einen feuerbeständigen Binder umfasst. Der Anteil der Polystyrol-Partikel beträgt dabei 20-75 Gew.-% bezogen auf das Gesamtgewicht der Zusammensetzung bestehend aus Polystyrol-Partikel, intumeszenter Stoff und Binder. Das heißt, dass der Polystyrol-Partikelanteil unter Umständen deutlich reduziert ist. Dies muss zwangsläufig eine Veränderung der Wärmedämmeigenschaften eines hieraus hergestellten Dämmelementes zur Folge haben, wenn die fehlenden Polystyrol-Partikel nicht durch gleichwertige Dämmstoffe ersetzt werden. Um zudem weiterhin die mechanische Stabilität des Schaumstoffformkörpers zu gewährleisten, muss der Bindemittelanteil erhöht werden. Der hohe Bindemittelanteil wiederum macht den Einsatz eines nicht brennbaren Bindemittels erforderlich. Es ist jedoch allgemein bekannt, dass die Bindekraft nicht brennbarer, in der Regel anorganischer Bindemittel im Vergleich zu organischen Bindemitteln herabgesetzt ist, so dass eher eine Entmischung der Ausgangsstoffe in der Form zu erwarten ist, welche die Qualität des derart hergestellten Schaumstoffformkörpers beeinträchtigt.

Aus der EP 0994 145 A1 gehen ferner Schaumstoffe auf Basis von Styrolpolymerisaten hervor, die 5-50 Gew.-% expandierbaren hexagonalen Graphit als Flammschutzmittel enthalten. Der expandierbare Graphit kann hierzu auf die vorgeschäumten Partikel des Styrolpolymerisats aufgebracht oder dem ungeschäumten Styrolpolymerisat zugegeben werden.

Darüber hinaus ist aus der EP 0113 511 A2 ein flammgeschützter Schaumkunststoff bekannt, der ein intumeszentes Material enthält, das zusätzlich einen Aktivator und ein Bindemittel umfassen kann. Die Aufgabe des Bindemittels besteht darin, die Partikel des eigentlichen Flammschutzmittels mit einem Film zu überziehen, um das Entweichen von Gasen zu verhindern. Um dies zu erreichen, werden beispielsweise die Inhaltsstoffe des intumeszenten Materials mit Wasser gemischt, getrocknet und zu Pulver zermahlen, um das Pulver anschließend den anderen Ausgangsstoffen zuzugeben.

Ausgehend von dem vorstehend genannten Stand der Technik liegt der vorliegenden Erfindung die Aufgabe zugrunde, ein Verfahren zur Herstellung eines flammgeschützten, Polystyrol-Partikel enthaltenden Dämmelementes anzugeben, das einerseits ein gegenüber herkömmlichen Polystyrol-Hartschaumplatten aus Brandschutzsicht verbessertes Brandschutzverhalten sowie andererseits hervorragende Wärmedämmeigenschaften aufweist. Zugleich soll ein Dämmelement mit einer hohen mechanischen Stabilität geschaffen werden.

Zur Lösung der Aufgaben wird ein Verfahren mit den Merkmalen des Anspruchs 1 vorgeschlagen. Vorteilhafte Weiterbildungen des erfindungsgemäßen Verfahrens sind in den auf Anspruch 1 rückbezogenen Unteransprüchen angegeben. Ferner werden ein Dämmelement sowie eine bevorzugte Verwendung eines nach einem erfindungsgemäßen Verfahren hergestellten Dämmelementes vorgeschlagen.

### Offenbarung der Erfindung

Bei dem zur Herstellung eines flammgeschützten Dämmelementes vorgeschlagenen Verfahren werden schäumbare und/oder vorgeschäumte Polystyrol-Partikel verwendet, von denen zumindest ein Teil vor dem Einfüllen in eine Form und dem Versintern beschichtet werden. Erfindungsgemäß ist vorgesehen, dass die schäumbaren und/oder vorgeschäumten Polystyrol-Partikel zumindest teilweise mit einem organischen Bindemittel und mit wenigstens einem Flammschutzmittel beschichtet werden, wobei Bindemittel und Flammschutzmittel in Pulverform verwendet werden und wobei die mit Bindemittel und Flammschutzmittel beschichteten schäumbaren und/oder vorgeschäumten Polystyrol-Partikel in eine Form eingegeben und unter Zugabe von Wärme versintert werden, so dass das Bindemittel erweicht und ein zusätzliches Verkleben der Feststoffe bewirkt.

"In Pulverform" soll bedeuten, dass "trockene" Ausgangsstoffe bzw. Feststoffe zum Beschichten der schäumbaren und/oder vorgeschäumten Polystyrol-Partikel eingesetzt werden. Die pulverförmigen Beschichtungsmittel werden hierzu in Kontakt mit den schäumbaren und/oder vorgeschäumten Polystyrol-Partikeln gebracht, wobei die Oberflächenrauigkeit der schäumbaren und/oder vorgeschäumten Polystyrol-Partikel bereits eine Haftung der Beschichtungsmittel bewirkt.

Die pulverförmige Beschichtung kann sowohl auf schäumbare, als auch auf vorgeschäumte Polystyrol-Partikel aufgebracht werden.

Bei schäumbaren Polystyrol-Partikeln spricht man allgemein von Polystyrol-Beads, das heißt einem Polystyrol-Granulat, das noch keinem Vorschäumprozess unterzogen wurde. Diese werden zunächst mit pulverförmigen Bindemittel und Flammschutzmittel gemischt und anschließend vorgeschäumt. Die Beschichtung mit Bindemittel und Flammschutzmittel erfolgt vorzugsweise während des Vorschäumens, indem durch Zugabe von Wärme das Bindemittel zum Erweichen gebracht wird. Die sich beim Vorschäumen ausdehnenden Polystyrol-Partikel sowie die Bewegung der Polystyrol-Partikel im Vorschäumbehälter bewirken, dass sich das erweichte Bindemittel um die Partikel legt und das Flammschutzmittel an die Partikel bindet.

Alternativ oder ergänzend können bereits vorgeschäumte Polystyrol-Partikel, sogenannte Polystyrol-Perlen, mit Bindemittel und Flammschutzmittel in Pulverform beschichtet und zur weiteren Herstellung eines flammgeschützten Dämmelementes eingesetzt werden.

Vorzugsweise werden bei Verwendung schäumbarer Polystyrol-Partikel diese nach dem Mischen mit den Beschichtungsmitteln vorgeschäumt bevor sie in eine Form eingebracht und versintert werden. In die Form gelangen demnach beschichtete vorgeschäumte Polystyrol-Partikel, unabhängig davon, ob schäumbare oder vorgeschäumte Polystyrol-Partikel als Ausgangsstoffe verwendet werden. Im Unterschied zu beschichteten vorgeschäumten Polystyrol-Partikeln, die erst vorgeschäumt und dann beschichtet wurden, weisen die Erstgenannten in der Regel eine verbesserte Haftung des Flammschutzmittels an den Polystyrol-Partikeln auf. Denn insbesondere, wenn das Beschichten beim Vorschäumen erfolgt, dringen die zunächst nur oberflächlich anhaftenden pulverförmigen Beschichtungsmittel, insbesondere das Flammschutzmittel, tief in die Oberfläche der expandierenden Polystyrol-Partikel ein. Wird beim Vorschäumen Wasserdampf als Heizmedium eingesetzt, bewirkt die hierbei auftretende Feuchtigkeit ferner ein Verkleben der ursprünglich "trockenen" Ausgangsstoffe. Der als Heizmedium eingesetzte Wasserdampf führt darüber hinaus zu einem Erweichen des Bindemittels, insbesondere, wenn es sich um ein thermoplastisches Bindemittel handelt. Das erweichende und anschließend aushärtende Bindemittel bildet dann eine das Flammschutzmittel zusätzlich bindende Matrix aus. Durch die verbesserte Haftung des Flammschutzmittels an den Polystyrol-Partikeln ist sichergestellt, dass es nicht zu einer Entmischung der Ausgangsstoffe in der Form kommt. Beim nachfolgenden Versintern werden dann Bindemittel und Flammschutzmittel dauerhaft in den Polystyrol-Partikelschaum eingebunden.

Der Vorschäumprozess kann kontinuierlich oder diskontinuierlich durchgeführt werden. Erfolgt das Vorschäumen in einem Rührer oder Mischer, trägt die Bewegung zu einer gleichmäßigen Verteilung des Bindemittels und des Flammschutzmittels bei.

Die gewählte Formulierung, wonach die Polystyrol-Partikel "zumindest teilweise mit einem organischen Bindemittel und einem Flammschutzmittel beschichtet werden", soll bedeuten, dass vor dem Einbringen der beschichteten vorgeschäumten Polystyrol-Partikel in die Form diesen unbeschichtete vorgeschäumte Polystyrol-Partikel beigemischt werden können. Das heißt, dass ein Teil der verwendeten vorgeschäumten Polystyrol-Partikel auch unbeschichtet bleiben kann. Die Formulierung soll ferner bedeuten, dass alternativ oder ergänzend die Beschichtung mit Bindemittel und Flammschutzmittel lediglich partiell aufgebracht werden kann. In diesem Fall bedeutet "zumindest teilweise beschichtet", dass ein Teil der Polystyrol-Partikel nicht vollflächig beschichtet sein muss, sondern auch unbeschichtete Oberflächenbereiche aufweisen kann.

Der Anteil unbeschichteter und/oder lediglich teilweise beschichteter Polystyrol-Partikel fördert einen Verbund der Partikel untereinander, indem diese - wie bei der Herstellung herkömmlichen Polystyrol-Hartschaums - während des Versinterns miteinander verschmelzen. Dadurch bleibt eine hohe mechanische Stabilität des derart hergestellten Formkörpers erhalten. Ferner wird auf diese Weise der Bindemittelanteil reduziert. Der geringe Bindemittelanteil ermöglicht die Verwendung eines organischen Bindemittels, das gegenüber anorganischen Bindemitteln zwar brennbar ist, dafür aber eine erhöhte Bindekraft besitzt. Dies wirkt sich insbesondere positiv auf die Bindung des Flammschutzmittels an den Polystyrol-Partikeln aus.

Bevorzugt wird ein Flammschutzmittel zum Beschichten der vorgeschäumten Polystyrol-Partikel verwendet, das im Brandfall eine ablative oder intumeszierende Schutzschicht bildet. Unter einer ablativen Schutzschicht wird vorliegend eine nicht brennbare Schutzschicht verstanden, die "passiv" Feuerwiderstand leistet. Unter einer intumeszierenden Schutzschicht wird eine Schutzschicht verstanden, die erst im Brandfall durch Aufschäumen eine isolierende Schutzschicht ausbildet und demnach "aktiv" Feuerwiderstand leistet. Darüber hinaus können Wasser freisetzende "kühlende" Flammschutzmittel eingesetzt werden, beispielsweise Metallhydroxide, Alkalimetallsilikate sowie Hydrate von Metallsalzen oder -oxiden, die bei erhöhten Temperaturen chemisch oder physikalisch gebundenes Wasser abgeben, im Übrigen aber als "trockenes" Pulver vorliegen. Entsprechende Flammschutzmittel sind hinlänglich bekannt und werden von verschiedenen Herstellern angeboten.

Alternativ oder ergänzend wird vorgeschlagen, dass Blähgraphit als Flammschutzmittel verwendet wird. Die flammwidrige Ausstattung der Beschichtung wird durch die Einbindung von Blähgraphit deutlich verbessert. Der Begriff "Blähgraphit" bezeichnet eine synthetisch hergestellte Produktgruppe aus natürlichem Graphit und blähbaren S- und/oder N-Verbindungen, die in die Schichtstruktur des Graphits eingelagert werden. Letztere expandieren unter Einfluss von Hitze, so dass eine aktive Brandbarriere aufgebaut wird. Die Blährate kann dabei bis um das Mehrhundertfache des ursprünglichen Volumens des Blähgraphits betragen.

Als organisches Bindemittel wird weiterhin bevorzugt ein Dispersionspulver, beispielsweise ein Dispersionspulver auf Basis von Acrylat, Styrolacrylat, Vinylacetat, Vinylacetat-Ethylen und/oder Vinylchlorid zum Beschichten der Polystyrol-Partikel verwendet. Der geringe Bindemittelanteil ermöglicht den Einsatz organischer und damit brennbarer Bindemittel. Organische Bindemittel weisen gegenüber anorganischen, nicht brennbaren Bindemitteln eine erhöhte Bindekraft auf, so dass der Bindemittelanteil gering gehalten werden kann. Zudem fördert der Einsatz eines thermoplastischen Bindemittels ein Verkleben der Beschichtungsmittel miteinander und mit den Polystyrol-Partikeln, wenn diese unter Zugabe von Wärme vorgeschäumt und/oder versintert werden.

Gemäß einer bevorzugten Ausführungsform der Erfindung werden schäumbare Polystyrol-Partikel, d.h. noch nicht vorgeschäumte Polystyrol-Beads, verwendet, die mit pulverförmigem Bindemittel und Flammschutzmittel gemischt und anschließend vorgeschäumt werden. Das Mischen der Ausgangsstoffe kann dabei auch erst im Vorschäumbehälter und/oder während des Vorschäumens erfolgen. Der Vorschäumprozess verbessert die Haftung des Bindemittels und des Flammschutzmittels an den Polystyrol-Partikeln, da das Bindemittel erweicht und das Flammschutzmittel an die Oberfläche der Polystyrol-Partikel bindet. Werden die Ausgangsstoffe während des Vorschäumens gemischt, das heißt bewegt, verteilt sich das erweichte Bindemittel weitgehend gleichmäßig auf der Oberfläche der Polystyrol-Partikel, so dass auf diese Weise eine weitgehende gleichmäßige Beschichtung der Partikel mit Flammschutzmittel gewährleistet ist. Denn das Flammschutzmittel bleibt insbesondere an dem erweichten Bindemittel haften. Die vorteilhafte Bewegung der Ausgangsstoffe kann dadurch bewirkt werden, dass diese beim Vorschäumen zugleich gerührt werden.

Mit dem Vorgang des Mischens kann zugleich die Beschichtung der Polystyrol-Partikel bewirkt werden. Wie bereits erwähnt, kann ferner das Mischen bzw. das Beschichten während des Vorschäumens erfolgen. Demzufolge können die Vorgänge Mischen, Beschichten und Vorschäumen zeitlich zusammen oder auseinander fallen. Dies gilt sowohl in Bezug auf die Verwendung schäumbarer als auch vorgeschäumter Polystyrol-Partikel.

Gemäß einer weiteren bevorzugten Ausführungsform der Erfindung werden bereits vorgeschäumte Polystyrol-Partikel verwendet und mit pulverförmigem Bindemittel und Flammschutzmittel gemischt. Dabei können auch solche vorgeschäumten Polystyrol-Partikel zum Einsatz gelangen, die noch eine gewisse Restfeuchte vom Vorschäumen aufweisen. Dies hat den Vorteil, dass die pulverförmigen Beschichtungsmittel nicht allein über die Oberflächenrauigkeit der Partikel an diesen haften, sondern ferner über die in den Partikeln enthaltene Restfeuchte gebunden werden. Ergänzend können die bereits vorgeschäumten Polystyrol-Partikel einem weiteren Vorschäumprozess unterzogen werden, bei welchem das anhaftende Bindemittel erweicht und das Flammschutzmittel an die Polystyrol-Partikel bindet.

Bei Anwendung eines erfindungsgemäßen Verfahrens werden zunächst sämtliche Ausgangsstoffe "trocken" (von einer etwaigen, in den vorgeschäumten Polystyrol-Partikeln enthaltenen Restfeuchte abgesehen) zusammengegeben und innig gemischt, wobei das Mischen in einem Vorschäumbehälter und/oder beim Vorschäumen erfolgen kann. Die sich dabei an der Oberfläche der Polystyrol-Partikel ablagernden pulverförmigen Beschichtungsmittel werden durch das Vorschäumen und/oder das Erweichen des Bindemittels an die Polystyrol-Partikel gebunden.

In Abhängigkeit von den Gewichtsanteilen der verwendeten Ausgangsstoffe können die Polystyrol-Partikel nach dem Mischen und Vorschäumen vollständig oder nur partiell mit Bindemittel und Flammschutzmittel beschichtet sein. Um lediglich partiell beschichtete vorgeschäumte Polystyrol-Partikel zu erhalten, können die pulverförmigen Beschichtungsmittel vor dem Vorschäumen auch durch Aufstreuen oder dergleichen in Kontakt mit den Polystyrol-Partikeln gebracht werden, die dann anschließend vorgeschäumt werden.

Ferner wird vorgeschlagen, dass die schäumbaren und/oder vorgeschäumten Polystyrol-Partikel, nachdem sie mit Bindemittel und Flammschutzmittel beschichtet wurden, in eine Form eingegeben und unter Zugabe von Druck und Wärme versintert werden. Durch das nochmalige Aufschäumen und Verschweißen der Polystyrol-Partikel ist sichergestellt, dass das Flammschutzmittel in dem Polystyrol-Partikelschaum fest eingebunden ist. Hierzu leistet auch das Bindemittel einen Beitrag, da dieses bei der Zugabe von Wärme erweicht und ein zusätzliches Verkleben der Feststoffe bewirkt.

Sofern schäumbare Polystyrol-Partikel verwendet werden, die vor dem Versintern mit Bindemittel und Flammschutzmittel beschichtet werden, kann auch der Zwischenschritt des Vorschäumens entfallen, so dass diese nur einem Schäumprozess unterzogen werden.

Gemäß einer bevorzugten Ausführungsform der Erfindung werden den mit Bindemittel und Flammschutzmittel beschichteten schäumbaren und/oder vorgeschäumten Polystyrol-Partikeln vor dem Eingeben in eine Form unbeschichtete Polystyrol-Partikel beigemischt. Die Beimischung unbeschichteter Polystyrol-Partikel - wie auch die Beimischung oder ausschließliche Verwendung lediglich partiell beschichteter Polystyrol-Partikel - fördert ein Verschmelzen der Polystyrol-Partikel miteinander. Wie bereits erwähnt, bewirkt das Verschmelzen bzw. Versintern einen stabilen Verbund der Polystyrol-Partikel untereinander, so dass ein derart hergestelltes Dämmelement eine hohe mechanische Festigkeit aufweist. Vorteilhafterweise beträgt der Anteil der unbeschichteten Polystyrol-Partikel 0 bis 99 Vol.-%, vorzugsweise 25 bis 90 Vol.-% und besonders bevorzugt 50 bis 88 Vol.-% bezogen auf das Gesamtvolumen der verwendeten Polystyrol-Partikel.

Die Beimischung unbeschichteter Polystyrol-Partikel bewirkt eine Erhöhung des Polystyrol-Anteils, so dass ein nach diesem Verfahren hergestellter Polystyrol-Partikelschaum sehr gute Wärmedämmeigenschaften - vergleichbar denen herkömmlicher Polystyrol-Schaumstoffe - aufweist. Im Unterschied zu diesen besitzt der nach einem erfindungsgemäßen Verfahren hergestellte Polystyrol-Partikelschaum jedoch zugleich eine erhöhte Brandbeständigkeit. Die erhöhte Brandbeständigkeit wird selbst bei einer Beschichtung mit organischem brennbarem Bindemittel erreicht, da der Bindemittelanteil insgesamt relativ gering ist.

Versuche an Probekörpern haben überraschenderweise gezeigt, dass eine erhöhte Zugabe von Bindemitteln und/oder Flammschutzmitteln nicht zwangsläufig auch zu einer erhöhten Brandbeständigkeit des Dämmelementes führt. Insbesondere mit zunehmender Menge an Bindemittel - unabhängig davon, ob brennbar oder nicht brennbar - besteht die Gefahr, dass die Brandbeständigkeit abnimmt. Dies liegt darin begründet, dass das Bindemittel Stege zwischen den Polystyrol-Partikeln ausbildet, welche im Brandfall gleichsam als "Docht" wirken, entlang dessen sich ein Feuer ausbreiten kann. Derartige Bindemittelstege unterstützen demnach die Brandausbreitung. Insofern gilt es, die Ausbildung solcher Bindemittelstege zu verhindern, was insbesondere dann gelingt, wenn der Bindemittelanteil möglichst gering gehalten wird.

Gemäß einer bevorzugten Ausführungsform der Erfindung werden 30 bis 95 Gew.-% schäumbare und/oder vorgeschäumte Polystyrol-Partikel, 0,5 bis 67,5 Gew.-% Bindemittel und 2,5 bis 67,5 Gew.-% Flammschutzmittel, vorzugsweise 40 bis 90 Gew.-% Polystyrol-Partikel, 2,5 bis 55 Gew.-% Bindemittel und 5 bis 55 Gew.-% Flammschutzmittel, weiterhin vorzugsweise 50 bis 85 Gew.-% Polystyrol-Partikel, 5 bis 35 Gew.-% Bindemittel und 7,5 bis 35 Gew.-% Flammschutzmittel, bezogen auf das Gesamtgewicht der Ausgangsstoffe verwendet. Da nur "trockene" Ausgangsstoffe verwendet werden, entspricht das Gesamtgewicht dem Trockengesamtgewicht der Ausgangsstoffe. Um einen Dämmstoff mit hervorragenden Wärmedämmeigenschaften zu erhalten, liegt der Gewichtsanteil der Polystyrol-Partikel besonders bevorzugt bei mindestens 76 Gew.-% bezogen auf das Gesamtgewicht der Ausgangsstoffe.

Gemäß einer weiteren bevorzugten Ausführungsform der Erfindung beträgt das Gewichtsverhältnis der schäumbaren und/oder vorgeschäumten Polystyrol-Partikel zum Flammschutzmittel 0,4 bis 38, vorzugsweise 0,75 bis 34, weiterhin vorzugsweise 1,05 bis 20. Versuche mit entsprechend hergestellten Dämmelementen haben gezeigt, dass diese eine besonders erhöhte Brandbeständigkeit bzw. verringerte Entzündungsneigung aufweisen.

Gemäß einer Weiterbildung der Erfindung werden den beschichteten und/oder unbeschichteten Polystyrol-Partikeln vor dem Eingeben in die Form Fasern, Füllstoffe und/oder Additive zugegeben. Durch die Zugabe von Fasern, Füllstoffen und/oder Additiven können die stoffspezifischen Eigenschaften des Dämmelementes beeinflusst werden. So kann beispielsweise durch die Zugabe von Fasern die mechanische Festigkeit des Dämmelementes erhöht werden.

Das vorstehend beschriebene erfindungsgemäße Verfahren weist den Vorteil auf, dass die bislang zur Herstellung von Dämmelementen aus Polystyrol-Hartschaum eingesetzten Anlagen weiterhin eingesetzt werden können. D.h., dass keine neue Anlagentechnik erforderlich ist, so dass das erfindungsgemäße Verfahren kostengünstig durchführbar ist. Insbesondere können die bekannten Blockschäumanlagen sowie Formteilautomaten eingesetzt werden.

Vorgeschlagen wird ferner ein Dämmelement, das nach einem der vorhergehenden Verfahren hergestellt worden, wasserundurchlässig und wasserdampfdiffusionsoffen ist. Ein solches Dämmelement nimmt kein Wasser auf, behindert aber die Wasserdampfdiffusion nicht. Es ist demnach insbesondere im Außenbereich oder in feuchtigkeitsbelasteten Innenräumen als Schall- und/oder Wärmedämmelement einsetzbar. Die Wasserundurchlässigkeit des Dämmelementes ist bevorzugt Folge des Versinterns unter Zugabe von Druck und Wärme, bei welchem die zwischen den Partikeln verbleibenden Zwickelräume voneinander isoliert werden. Denn beim Versintern unter Zugabe von Druck und Wärme werden die Ausgangsstoffe durch Druckzunahme in der Form verdichtet. Der Druck kann dabei von Außen aufgebracht und/oder dadurch erzeugt, werden, dass die Polystyrol-Partikel den Drang haben sich auszudehnen. Dabei drängen sich die Polystyrol-Partikel dicht aneinander und verformen sich derart, dass das Zwickelvolumen zwischen den Partikeln reduziert und zugleich isoliert wird.

Schließlich wird die Verwendung eines nach einem erfindungsgemäßen Verfahren hergestellten Dämmelementes zur Schall- und/oder Wärmedämmung einer Gebäudewand oder -decke vorgeschlagen. Hierin ist die bevorzugte Verwendung eines solchen Dämmelementes zu sehen, da hierbei die besonderen Eigenschaften, insbesondere die erhöhte Brandbeständigkeit unter Beibehaltung der sehr guten Wärmedämmeigenschaften, besonders gut zum Tragen kommen. Ferner wird den hohen Brandschutzanforderungen im Baubereich Rechnung getragen.

Das erfindungsgemäße Verfahren sowie hiernach hergestellte Dämmelemente werden nachfolgend anhand von Beispielen näher beschrieben.

Allen Beispielen gemein ist, dass herkömmliche schäumbare, d.h. noch nicht vorgeschäumte Polystyrol-Beads verwendet wurden, wie sie zurzeit von diversen Herstellern angeboten werden. In den Beispielen 1 und 2 sowie im Referenzbeispiel kamen die gleichen EPS-Beads zum Einsatz.

In einem ersten Schritt wurden die EPS-Beads mit einem Dispersionspulver und einem Flammschutzmittel gemischt und anschließend unter Zugabe von Druck (1 bar) und Wärme (100°C), wobei Wasserdampf als Heizmedium diente, vorgeschäumt. Dabei erweichte das Dispersionspulver und band das Flammschutzmittel in die Bindemittelmatrix ein. Anschließend wurden die beschichteten und vorgeschäumten EPS-Perlen in einem Fließbetttrockner getrocknet (Verweildauer ca. 15 min.), wobei warme Luft als Trocknungsmedium diente. Dabei härteten sowohl die EPS-Perlen, als auch das erweichte Bindemittel aus.

In einem zweiten Schritt wurden den beschichteten und vorgeschäumten EPS-Perlen unbeschichtete herkömmliche EPS-Perlen (Korngröße 3 - 8 mm, Schüttdichte 0,015 - 0,016 g/cm³) beigemischt. Die Mischung wurden dann in eine Form der Abmessung 30 cm x 30 cm x 10 cm eingegeben und unter Zugabe von Druck (1 bar) und Wärme (100°C), wobei wiederum Wasserdampf als Heizmedium diente, der die Form von oben nach unten 10 - 15 Sekunden lang flächig durchströmte, verblockt. Nach dem Druckabbau wurde das Formteil aus der Form genommen und über einen Zeitraum von einer Woche bei Raumtemperatur getrocknet.

### Beispiel 1

Es wurden 56 Gew.-% EPS-Beads mit 12,5 Gew.-% Dispersionspulver (Basis Vinylacetat-Ethylen) und 31,5 Gew.-% Blähgraphit gemischt und - wie zuvor beschrieben - vorgeschäumt. 10 Vol.-% der derart hergestellten beschichteten vorgeschäumten EPS-Perlen wurden dann mit 90 Vol.-% unbeschichteten vorgeschäumten EPS-Perlen homogen vermischt und in der Blockform - wie zuvor beschrieben - versintert und getrocknet.

Das derart hergestellte Formteil wies eine Wärmeleitfähigkeit λ nach DIN EN 12667 von 0,0299 W/(mK) und eine Dichte p nach DIN EN 1602 von 16,9 kg/m³ sowie eine Zugfestigkeit senkrecht zur Plattenoberfläche nach DIN EN 1607 von 154 kPa auf. Ferner wurde das Brandverhalten des Formteils getestet, wobei das Formteil zur Beurteilung der Brennbarkeit und des Brandverhaltens einer rauschenden Bunsenbrennerflamme ausgesetzt wurde. Das Testverfahren zeigte ein deutlich vermindertes thermoplastisches Fließen der Schmelze. Die Bildung eines Polymersees war lokal begrenzt. Ein brennendes Abtropfen sowie ein selbständiges Weiterbrennen der Schmelze waren stark vermindert.

### Beispiel 2

Es wurden 56 Gew.-% EPS-Beads mit 12,5 Gew.-% Dispersionspulver (Basis Polyvinylalkohol) und 31,5 Gew.-% Blähgraphit gemischt und - wie zuvor beschrieben - vorgeschäumt. 40 Vol.-% der derart hergestellten beschichteten vorgeschäumten EPS-Perlen wurden dann mit 60 Vol.-% unbeschichteten vorgeschäumten EPS-Perlen homogen vermischt und in der Blockform - wie zuvor beschrieben - versintert und getrocknet.

Das derart hergestellte Formteil wies eine Wärmeleitfähigkeit λ nach DIN EN 12667 von 0,0307 W/(mK) und eine Dichte p nach DIN EN 1602 von 20,2 kg/m³ sowie eine Zugfestigkeit senkrecht zur Plattenoberfläche nach DIN EN 1607 von 166 kPa auf. Ferner wurde das Brandverhalten des Formteils getestet, wobei das Formteil zur Beurteilung der Brennbarkeit und des Brandverhaltens einer rauschenden Bunsenbrennerflamme ausgesetzt wurde. Das Testverfahren zeigte kein thermoplastisches Fließen der Schmelze. Ein brennendes Abtropfen fand nicht statt. Ferner konnte ein selbstständiges Weiterbrennen des Prüfkörpers nach Entfernen der Flamme vollständig unterbunden werden.

### Referenzbeispiel

Es wurden 9 Liter unbeschichtete vorgeschäumte EPS-Perlen (Korngröße 3 - 8 mm, Schüttdichte 0,015 - 0,16 g/cm³) in eine Form der Abmessungen 30 cm x 30 cm x 10 cm eingegeben und unter Zugabe von Druck (1 bar) und Wärme (100°C), wobei Wasserdampf als Heizmedium diente, der die Form 10 - 15 Sekunden lang von oben nach unten flächig durchströmte, verblockt. Nach dem Druckabbau wurde das Formteil aus der Form genommen und über einen Zeitraum von einer Woche bei Raumtemperatur getrocknet.

Das derart hergestellte Formteil wies eine Wärmeleitfähigkeit λ nach DIN EN 12667 von 0,0297 W/(mK) und eine Dichte p nach DIN EN 1602 von 15,8 kg/m³ sowie eine Zugfestigkeit senkrecht zur Plattenoberfläche nach DIN EN 1607 von 173 kPa auf. Ferner wurde das Brandverhalten des Formteils getestet, wobei das Formteil zur Beurteilung der Brennbarkeit und des Brandverhaltens einer rauschenden Bunsenbrennerflamme ausgesetzt wurde. Das Testverfahren zeigte ein sofortiges thermoplastisches Schmelzen mit brennendem Abtropfen, was die Bildung eines brennenden Polymersees zur Folge hatte.

Ein nach einem erfindungsgemäßen Verfahren hergestelltes Dämmelement (Beispiele 1 und 2) weist demnach gegenüber einem herkömmlichen Dämmelement aus Polystyrol-Hartschaum (Referenzbeispiel) ein deutlich verbessertes Brandverhalten auf. Aufgrund einer nicht mehr fließfähigen Schmelze bzw. eines stark verminderten Fließverhaltens bleibt der Brandherd lokal begrenzt. Insbesondere bildet sich kein brennender Polymersee. Zugleich weisen die nach einem erfindungsgemäßen Verfahren hergestellten Dämmelemente weiterhin sehr gute Wärmedämmeigeneschaften sowie eine hohe mechanische Festigkeit auf.

## Patentansprüche

1. Verfahren zur Herstellung eines flammgeschützten Dämmelementes, bei welchem schäumbare und/oder vorgeschäumte Polystyrol-Partikel verwendet werden, von denen zumindest ein Teil vor dem Einfüllen in eine Form und dem Versintern beschichtet werden,
**dadurch gekennzeichnet, dass** die schäumbaren und/oder vorgeschäumten Polystyrol-Partikel zumindest teilweise mit einem organischen Bindemittel und einem Flammschutzmittel beschichtet werden, wobei Bindemittel und Flammschutzmittel in Pulverform verwendet werden und wobei die mit Bindemittel und Flammschutzmittel beschichteten schäumbaren und/oder vorgeschäumten Polystyrol-Partikel in eine Form eingegeben und unter Zugabe von Wärme versintert werden, so dass das Bindemittel erweicht und ein zusätzliches Verkleben der Feststoffe bewirkt.

2. Verfahren nach Anspruch 1,
**dadurch gekennzeichnet, dass** ein Flammschutzmittel zum Beschichten der vorgeschäumten Polystyrol-Partikel verwendet wird, das im Brandfall eine ablative oder intumeszierende Schutzschicht bildet, und/oder, dass Blähgraphit als Flammschutzmittel verwendet wird.

3. Verfahren nach Anspruch 1 oder 2,
**dadurch gekennzeichnet, dass** ein Dispersionspulver, beispielsweise ein Dispersionspulver auf Basis von Acrylat, Styrolacrylat, Vinylacetat, Vinylacetat-Ethylen und/oder Vinylchlorid, als organisches Bindemittel zum Beschichten der Polystyrol-Partikel verwendet wird.

4. Verfahren nach einem der vorhergehenden Ansprüche,
**dadurch gekennzeichnet, dass** schäumbare Polystyrol-Partikel mit dem Bindemittel und dem Flammschutzmittel in Pulverform gemischt und dann vorgeschäumt werden.

5. Verfahren nach einem der vorhergehenden Ansprüche,
**dadurch gekennzeichnet, dass** vorgeschäumte Polystyrol-Partikel mit dem Bindemittel und/oder dem Flammschutzmittel in Pulverform gemischt werden.

6. Verfahren nach einem der vorhergehenden Ansprüche,
**dadurch gekennzeichnet, dass** die mit Bindemittel und Flammschutzmittel beschichteten schäumbaren und/oder vorgeschäumten Polystyrol-Partikel in eine Form eingegeben und unter Zugabe von Druck und Wärme versintert werden.

7. Verfahren nach einem der vorhergehenden Ansprüche,
**dadurch gekennzeichnet, dass** den mit Bindemittel und Flammschutzmittel beschichteten schäumbaren und/oder vorgeschäumten Polystyrol-Partikeln vor dem Eingeben in eine Form unbeschichtete Polystyrol-Partikel beigemischt werden, wobei der Anteil der unbeschichteten Polystyrol-Partikel vorzugsweise 0 bis 99 Vol.-%, weiterhin vorzugsweise 25 bis 90 Vol.-% und besonders bevorzugt 50 bis 88 Vol.-% bezogen auf das Gesamtvolumen der verwendeten Polystyrol-Partikel beträgt.

8. Verfahren nach einem der vorhergehenden Ansprüche,
**dadurch gekennzeichnet, dass** 30 bis 95 Gew.-% schäumbare und/oder vorgeschäumte Polystyrol-Partikel, 0,5 bis 67,5 Gew.-% Bindemittel und 2,5 bis 67,5 Gew.-% Flammschutzmittel, vorzugsweise 40 bis 90 Gew.-% Polystyrol-Partikel, 2,5 bis 55 Gew.-% Bindemittel und 5 bis 55 Gew.-% Flammschutzmittel, weiterhin vorzugsweise 50 bis 85 Gew.-% Polystyrol-Partikel, 5 bis 35 Gew.-% Bindemittel und 7,5 bis 35 Gew.-% Flammschutzmittel, bezogen auf das Gesamtgewicht der Ausgangsstoffe verwendet werden.

9. Verfahren nach einem der vorhergenden Ansprüche,
**dadurch gekennzeichnet, dass** das Gewichtsverhältnis der schäumbaren und/oder vorgeschäumten Polystyrol-Partikel zum Flammschutzmittel 0,4 bis 38, vorzugsweise 0,75 bis 34, weiterhin vorzugsweise 1,05 bis 20 beträgt.

10. Verfahren nach einem der vorhergehenden Ansprüche,
**dadurch gekennzeichnet, dass** den beschichteten und/oder unbeschichteten Polystyrol-Partikeln vor dem Eingeben in die Form Fasern, Füllstoffe und/oder Additive zugegeben werden.

11. Dämmelement, das nach einem der vorhergehenden Verfahren hergestellt worden, wasserundurchlässig und wasserdampfdiffusionsoffen ist.

12. Verwendung eines Dämmelementes, das nach einem der vorhergehenden Verfahren hergestellt worden ist, zur Schall- und/oder Wärmedämmung einer Gebäudewand oder -decke.

## Claims

1. A method for producing a flame-retardant insulating element, in which foamable and/or pre-foamed polystyrene particles are used, of which at least some are coated before filling into a mould and sintering,
**characterised in that** the foamable and/or pre-foamed polystyrene particles are coated at least in part with an organic binder and a flame retardant, wherein binder and flame retardant are used in powder form, and wherein the foamable and/or pre-foamed polystyrene particles coated with binder and flame retardant are introduced into a mould and are sintered under addition of heat, such that the binder softens and causes an additional bonding of the solids.

2. The method according to Claim 1,
**characterised in that** a flame retardant that forms an ablative or intumescent protective layer in the event of a fire is used to coat the pre-foamed polystyrene particles, and/or **in that** expandable graphite is used as flame retardant.

3. The method according to Claim 1 or 2,
**characterised in that** a dispersion powder, for example a dispersion powder based on acrylate, styrene acrylate, vinyl acetate, vinyl acetate ethylene and/or vinyl chloride, is used as organic binder for coating the polystyrene particles.

4. The method according to one of the preceding claims, **characterised in that** foamable polystyrene particles are mixed with the binder and the flame retardant in powder form and are then pre-foamed.

5. The method according to one of the preceding claims,
**characterised in that** pre-foamed polystyrene particles are mixed with the binder and/or the flame retardant in powder form.

6. The method according to one of the preceding claims,
**characterised in that** the foamable and/or pre-foamed polystyrene particles coated with binder and flame retardant are introduced into a mould and are sintered with addition of pressure and heat.

7. The method according to one of the preceding claims,
**characterised in that** the foamable and/or pre-foamed polystyrene particles coated with binder and flame retardant are admixed with polystyrene particles prior to the introduction into a mould, wherein the proportion of the uncoated polystyrene particles is preferably 0 to 99 vol. %, more preferably 25 to 90 vol. %, and particularly preferably 50 to 88 vol. %, in relation to the total volume of the polystyrene particles used.

8. The method according to one of the preceding claims,
**characterised in that** 30 to 95 % by weight of foamable and/or pre-foamed polystyrene particles, 0.5 to 67.5 % by weight of binder and 2.5 to 67.5 % by weight of flame retardant, preferably 40 to 90 % by weight of polystyrene particles, 2.5 to 55 % by weight of binder and 5 to 55 % by weight of flame retardant, more preferably 50 to 85 % by weight of polystyrene particles, 5 to 35 % by weight of binder and 7.5 to 35 % by weight of flame retardant, are used in relation to the total weight of the starting materials.

9. The method according to one of the preceding claims,
**characterised in that** the ratio by weight of the foamable and/or pre-foamed polystyrene particles to the flame retardant is 0.4 to 38, preferably 0.75 to 34, more preferably 1.05 to 20.

10. The method according to one of the preceding claims,
**characterised in that** fibres, fillers and/or additives are added to the coated and/or uncoated polystyrene particles prior to the introduction into the mould.

11. An insulating element that has been produced in accordance with one of the preceding methods and is impermeable to water and is open to steam diffusion.

12. Use of an insulating element that has been produced in accordance with one of the preceding methods for sound insulation and/or heat insulation of a building wall or ceiling.

## Revendications

1. Procédé de fabrication d'un élément d'isolation ignifuge, consistant à utiliser des particules de polystyrène susceptibles d'être expansées et/ou ayant préalablement subi une expansion, au moins une partie desdites particules étant revêtue avant d'être introduite dans un moule et agglomérée.
**caractérisé en ce que** les particules de polystyrène susceptibles d'être expansées et/ou ayant préalablement subi une expansion sont revêtues au moins partiellement d'un liant organique et d'un agent ignifuge, ledit liant et ledit agent ignifuge étant utilisés sous une forme pulvérulente, et les particules de polystyrène susceptibles d'être expansées et/ou ayant préalablement subi une expansion étant, une fois revêtues de liant et d'agent ignifuge, introduites dans un moule et agglomérées sous l'effet d'un apport de chaleur, faisant en sorte que le liant ramollisse et améliore le collage des matières solides.

2. Procédé selon la revendication 1,
**caractérisé en ce que** les particules de polystyrène ayant préalablement subi une expansion sont revêtues d'un agent ignifuge qui forme, en cas d'incendie, une couche protectrice ablative ou intumescente et/ou qu'on utilise en tant qu'agent ignifuge du graphite expansé.

3. Procédé selon les revendications 1 ou 2,
**caractérisé en ce que** l'on utilise, en tant que liant organique destiné à revêtir lesdites particules en polystyrène, par exemple une poudre dispersible à base d'acrylate, d'acrylate de styrène, d'acétate de vinyle, acétate de vinyle / éthylène et/ou de chlorure de vinyle.

4. Procédé selon l'une des revendications précédentes,
**caractérisé en ce que** l'on mélange des particules de polystyrène, lesquelles sont suceptibles d'être expansées, avec ledit liant et ledit agent ignifuge sous une forme pulvérulente, pour ensuite les soumettre à une expansion préalable.

5. Procédé selon l'une des revendications précédentes,
**caractérisé en ce que** l'on mélange des particules de polystyrène, lesquelles ont préalablement subi une expansion, avec ledit liant et/ou ledit agent ignifuge sous une forme pulvérulente.

6. Procédé selon l'une des revendications précédentes,
**caractérisé en ce qu'**une fois revêtues dudit liant et dudit agent ignifuge, les particules de polystyrène susceptibles d'être expansées et/ou ayant préalablement subi une expansion sont introduites dans un moule puis agglomérées sous l'effet d'un apport de pression et de chaleur.

7. Procédé selon l'une des revendications précédentes,
**caractérisé en ce qu'**avant leur introduction dans un moule, les particules de polystyrène susceptibles d'être expansées et/ou ayant préalablement subi une expansion sont mélangées avec des particules de polystyrène non-revêtues, la proportion des particules de polystyrène non-revêtues étant préférentiellement comprise entre 0 et 99 % en volume, encore préférentiellement entre 25 et 90 % en volume et, avec une préférence particulière, entre 50 et 88 % en volume, par rapport au volume total des particules de polystyrène utilisées.

8. Procédé selon l'une des revendications précédentes,
**caractérisé en ce que** l'on utilise 30 à 95 % en poids de particules de polystyrène susceptibles d'être expansées et/ou ayant préalablement subi une expansion, 0,5 à 67,5 % en poids de liant et 2,5 à 67,5 % en poids d'agent ignifuge, préférentiellement 40 à 90 % en poids de particules de polystyrène susceptibles d'être expansées et/ou ayant préalablement subi une expansion, 2,5 à 55 % en poids de liant et 5 à 55 % en poids d'agent ignifuge, encore préférentiellement 50 à 85 % en poids de particules de polystyrène susceptibles d'être expansées et/ou ayant préalablement subi une expansion, 5 à 35 % en poids de liant et 7,5 à 35 % en poids d'agent ignifuge, par rapport au poids total des matières de départ.

9. Procédé selon l'une des revendications précédentes,
**caractérisé en ce que** le rapport de poids entre les particules de polystyrène susceptibles d'être expansées et/ou ayant préalablement subi une expansion et l'agent ignifuge est compris entre 0,4 et 38, préférentiellement entre 0,75 et 34, encore préférentiellement entre 1,05 et 20.

10. Procédé selon l'une des revendications précédentes,
**caractérisé en ce que** l'on ajoute aux particules de polystyrène revêtues et/ou non-revêtues, avant leur introduction dans ledit moule, des fibres, des charges et/ou des additifs.

11. Elément d'isolation fabriqué selon l'un des procédés précédentes, ledit élément étant étanche à l'eau et permettant la diffusion de la vapeur d'eau.

12. Utilisation d'un élément d'isolation, lequel a été fabriqué selon l'un des procédés précédente, pour réaliser l'isolation thermique et/ou phonique de la paroi ou du plafond d'un immeuble.
